(19) Europäisches Patentamt

European Patent Office

Office européen des brevets

(11) **EP 1 072 559 A2**

(12) **EUROPÄISCHE PATENTANMELDUNG**

(43) Veröffentlichungstag:
**31.01.2001 Patentblatt 2001/05**

(51) Int. Cl.[7]: **C02F 3/12**

(21) Anmeldenummer: **00115996.1**

(22) Anmeldetag: **26.07.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **26.07.1999 AT 129199**

(71) Anmelder: **INGERLE, Kurt
A-6020 Innsbruck (AT)**

(72) Erfinder: **INGERLE, Kurt
A-6020 Innsbruck (AT)**

(74) Vertreter:
**Hofinger, Engelbert, Dr.Dr. et al
Patentanwälte Torggler & Hofinger
Wilhelm-Greil-Strasse 16
6020 Innsbruck (AT)**

(54) **Einrichtung zur Reinigung von Abwasser**

(57)     Einrichtung zur Reinigung von kommunalem oder ähnlichem Abwasser mit einem nach der Einbeckentechnologie arbeitenden biologischen Reaktor, in dem die Phasen Rühren (R), Belüften (B), Vorabsetzen (V) und Abziehen (A) ablaufen und der durch eine Tauchwand (1) in einem Zulaufspeicher (2) und ein Hauptbecken (3) unterteilt ist, wobei der Zulauf kontinuierlich erfolgt, wobei in der gesamten R- und B- Phase im Zulaufspeicher und im Hauptbecken die gleiche Trockensubstanz und die gleichen biochemischen Prozesse vorhanden sind, wobei im Zutaufbereich das gesamte in der V- und A-Phase zufließende Abwasser gespeichert und somit ein Durchschlagen von Rohabwasser in den Ablauf vermieden wird, wobei die B-Phase variabel gestaltet und zuflußabhängig betrieben wird, und wobei die A-Phase beendet wird, wenn ein vorgegebener Tiefstwasserspiegel erreicht ist.

**Fig.1**

**Beschreibung**

Die Erfindung betrifft eine Einrichtung zur Reinigung von kommunalem oder ähnlichem Abwasser nach der Einbeckentechnologie.

Bei den herkömmlichen nach dem Belebungsverfahren arbeitenden Kläranlagen wird in einem biologischen Reaktor, dem Belebungsbecken, organische Substanz in Belebtschlamm umgewandelt. Im anschließenden Nachklärbecken sedimentiert der Belebtschlamm, und das Klarwasser kann abgezogen werden. Zur Aufrechterhaltung des Prozesses muß der in der Nachklärung sedimentierte Belebtschlamm wieder in das Belebungsbecken zurückgepumpt werden. Daß die biochemischen Prozesse und die Sedimentation in verschiedenen Becken erfolgen und der Belebtschlamm im Kreis geführt wird, ist für das Verfahren wesentlich.

In der Einbeckentechnik laufen während eines Zyklus in einem Becken die verschiedenen biochemischen und physikalischen Vorgänge ab. In der Rührphase (R) - falls diese vorhanden ist - wird denitrifiziert und biologisch Phosphor entfernt. In der Belüftungsphase (B) wird organische Substanz abgebaut und zusätzlich nitrifiziert. In der Vorabsetzphase (V) läuft ein Doppelprozeß ab: Einerseits setzt sich der Schlamm ab und andererseits wird bei diesem Prozeß gleichzeitig denitrifiziert. Der sich absetzende Schlamm bildet einen Filterkörper, der auch kleine Belebtschlammflocken aus dem Klarwasser herausfiltert und somit einen guten Kläranlagenablauf garantiert. Schließlich dient die Abzugsphase (A) dem Abzug von Klarwasser aus dem Klärbecken. Auch während dieser Phase sinkt der Schlamm weiter zu Boden und ist in der Lage zu denitrifizieren. Wird eine weitgehende Phosphorelimination gewünscht, so muß ein entsprechendes Fällungsmittel in das Klärbecken eingebracht werden. Das Fällungsmittel dient dann nicht nur der Phosphorelimination, sondern hat auch sehr positive Auswirkungen auf die Absetzeigenschaften des Schlammes.

Im Patent A 1658/95 wird im Anspruch 1 vorgeschlagen, den biologischen Reaktor durch eine Tauchwand in einen Zulaufspeicher und ein Hauptbecken zu unterteilen, in der eventuell vorhandenen Rührphase sowie in der Belüftungsphase Belebtschlamm vom Hauptbecken in den Zulaufbereich zu leiten, bis in beiden Becken im wesentlichen gleiche Verhältnisse herrschen, den Schlammspiegel im Zulaufbereich während des ersten Abschnittes der Abzugsphase oberhalb der Unterkante der Tauchwand zu halten, den Durchtritt von Rohabwasser in das Hauptbecken auf diese Weise zu verzögern und ein Durchschlagen von Rohabwasser durch das Hauptbecken zu vermeiden.

Diese im Anspruch 1 des Patentes A 1658/95 dargestellte Einrichtung hat den Nachteil, daß ein Durchtritt von Rohabwasser durch das Hauptbecken nur während des ersten Abschnittes der Abzugsphase mit Sicherheit vermieden wird bzw. eine Speicherung von Rohabwasser im Zulaufspeicher nur bis zu diesem Zeitpunkt erfolgt, und daß im zweiten Abschnitt der A-Phase ein Durchschlagen von Rohabwasser prinzipiell noch möglich ist und darüberhinaus für eine nachfolgende Denitrifikation wenig Rohabwasser zur Verfügung steht. Zusätzlich ist nur vorgesehen, Belebtschlamm vom Hauptbecken in den Zulaufbereich zurückzuleiten, bis in beiden Becken im wesentlichen gleiche Verhältnisse bezüglich der Trockensubstanz herrschen. Gleiche biochemische Zustände im Zulaufspeicher während der ganzen Rühr- bzw. Belüftungsphase wie im Hauptbecken (anoxe bzw. aerobe Zustände) sind nicht vorgesehen, wodurch ein größeres Beckenvolumen erforderlich wird.

Erfindungsgemäß wird jetzt vorgeschlagen, die im Patent A 1658/95 dargestellte Einrichtung wie folgt zu erweitern und wesentlich zu verbessern. Die Rohabwasserspeicherung im Zulaufspeicher wird bei kontinuierlichem Zulauf bis zum Ende der Abzugsphase verlängert und erfolgt somit in der ganzen Vorabsetz- und Abzugsphase. Ein Durchschlagen von Rohabwasser in den Ablauf der Anlage ist deshalb unmöglich und für eine eventuell anschließende Denitrifikation steht mehr Rohabwasser zur Verfügung. Zusätzlich wird darauf geachtet, daß im Zusatzspeicher und im Hauptbecken während der ganzen Rühr- und Belüftungsphase nicht nur ein gleicher Trockensubstanzgehalt, sondern auch gleiche biochemische Zustände herrschen. Dies bedeutet, daß in der Rührphase im Zusatzspeicher ein anoxes und in der Belüftungsphase ein aerobes Milieu vorhanden ist. Durch die gleichen biochemischen Zustände im Zulaufspeicher wie im Hauptbecken wird durch einen großen Zulaufspeicher kein zusätzliches Volumen erforderlich, und somit entstehen dadurch auch keine zusätzlichen Kosten.

Weitere Einzelheiten der Erfindung werden anschließend anhand der Zeichnung erläutert. In dieser ist

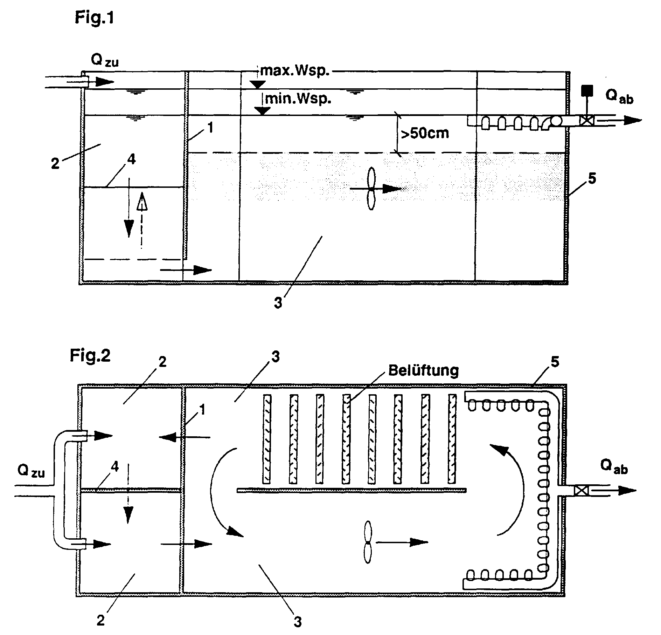

Fig. 1 ein Vertikalschnitt in Fließrichtung durch ein Becken einer Einbecken-Schwachlast-Biologie (ESB)-Stufe,
Fig. 2 zeigt einen Grundriß einer als Umlaufbecken ausgebildeten Anlage, in
Fig. 3 sind die Wasserspiegel- und Schlammspiegellagen während eines Zyklus mit den Zufluß und Abflußverhältnissen dargestellt, und
Fig. 4 und 5 zeigen Betriebsschemen von Kläranlagen mit mehreren zusammenwirkenden Becken.

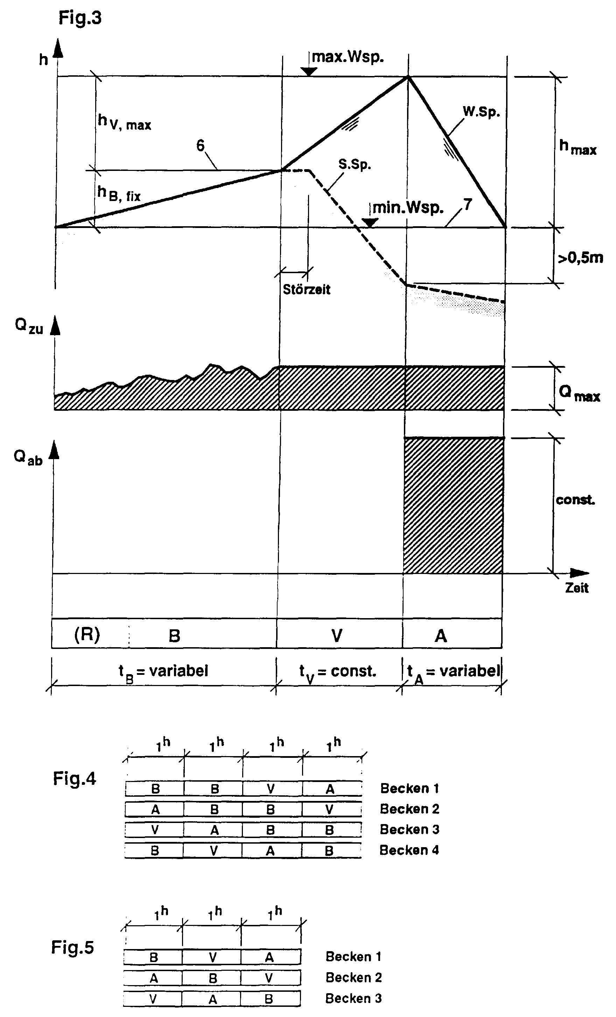

Erfindungsgemäß wird auch vorgeschlagen, die B-Phase einschließlich einer eventuell vorhandenen R-Phase ($t_B$) vom kontinuierlich in den biochemischen Reaktor zufließenden Rohabwasser abhängig zu machen und die V-Phase erst nach Erreichen einer fix vorgesehenen Höhe des Wasserspiegels im Reaktor ($h_B$) beginnen zu lassen (siehe Fig.3). Die V-Phase wird dann konstant ca. 1,0 h bis 1,5 h angenommen. Mit einem maximalen Rohabwasserzufluß erhält man am Ende der V- Phase einen max. Wasserspiegel im Reaktor und einen dazugehörigen Schlammspiegel, der mindestens 50 cm unterhalb des minimalen Wasserspiegels liegen muß, wenn ein fixer Abzug des gereinigten Abwassers eingesetzt wird. Während der gesamten ebenfalls variablen A-Phase muß dann der Schlammspiegel unterhalb der "50 cm-Marke" gehalten werden, um einen Abzug von Schlammflocken zu vermeiden. Der Abzug des gereinigten Abwassers kann auf einfache Weise ca. 20 bis 30 cm unter dem minimalen Wasserspiegel durch Öffnen eines Verschlusses oder in konstanter Menge durch einen abflußgesteuerten Verschluß (z. B. IDM-gesteuerter, elektrisch angetriebener Schieber) erfolgen. Die A-Phase wird dann automatisch nach Erreichen des minimalen Wasserspiegels im Reaktor abgebrochen. Am Ende der V-Phase kann automatisch Überschußschlamm und am Ende der A-Phase Schwimmschlamm abgezogen werden (in Fig. 3 nicht dargestellt). In Sonderfällen kann auch mit konstant langen A-Phasen gearbeitet werden. Das in Fig. 3 dargestellte System für ein Einzelbecken kann nur dann eingesetzt werden, wenn der stoßweise, hohe Abfluß vom Vorfluter verkraftet werden kann. Bei kommunalem Abwasser aus einer Mischkanalisation dürfte dies aber kein Problem sein, da die dann vorhandenen Regenentlastungen den Vorfluter um ein vielfaches mehr hydraulisch belasten,als der Abfluß aus einer solchen Kläranlage. Bei Vorhanden- sein von nur einem Becken (einstraßige Anlage) muß allerdings Vorsorge für den Störfall bzw. für notwendige Service-Arbeiten geschaffen werden.

Im Falle der Reinigung von kommunalem Abwasser nach dem Prinzip der simultanen aeroben Schlammstabilisierung ist ein mittlerer Belüftungsfaktor $\zeta_B = t_B : (t_B + t_V + t_A) = 0,75$ und nach dem Prinzip der Reinigung mit Vorklärung und N-Elimination $\zeta_B = 0,60$ erreichbar.

Ist ein dem Zufluß entsprechender kontinuierlicher Ablauf der Kläranlage gefordert, müssen mehrere Becken angeordnet und phasenverschoben betrieben werden. Bei einer vorgegebenen Wassertiefe der Becken erfordern die biochemischen Prozesse und die hydraulischen Vorgänge entsprechende Beckenflächen. Eine optimierte Kläranlage erhält man, wenn diese beiden Flächen gleich groß sind $F_{bio,erf} = (F_{hydr,erf})$. Die Forderung der Flächengleichheit führt schließlich zu einer optimalen Anzahl am Becken in Abhängigkeit der vorgegebenen Randbedingungen. Die biochemischen Prozesse werden primär durch folgende Parameter bestimmt: Kläranlagenbelastung (kg BSB5/d; kg TKN/d; kg P/d); Überschußschlamm (kg TS/kg BSB5). Schlammalter in Tagen; Trockensubstanz im System; Belüftungsfaktor in Abhängigkeit von der Beckenanzahl, vorgeschaltete und endogene Denitrifikationsraten. Die hydraulischen Vorgänge wiederum werden vorrangig von folgenden Faktoren bestimmt:

Maximale hydraulische Belastung der Kläranlage in m3/h, Anzahl der Becken, Phasenlänge in h; fixe oder schwimmende Abzugsvorrichtung, Sinkgeschwindigkeit des Schlammspiegels, Beckentiefe.

Optimierungsberechnungen einer Kläranlage führen beispielsweise zu folgenden Ergebnissen:

Kommunale Kläranlage mit simultaner aerober Schlammstabilisierung, Trenn- und Mischkanalisation; fixe Abflußeinrichtung: Vier Becken; Phasenzeiten ca. 1 h; Belüftungsfaktor: ($\zeta_B = 2 t_B : (2 t_B + t_V + t_A) = 0,5$ (siehe Fig. 4).

Kommunale Kläranlage mit Vorklärung, N- und P-Elimination, Trenn- und Mischkanalisation, fixe Abflußeinrichtung: Drei Becken; Phasenzeiten ca. 1 h; Belüftungsfaktor: $\zeta_B = t_B : (t_B + t_V t_A) = 0,33$ (siehe Fig. 5).

## Patentansprüche

1. Einrichtung zur Reinigung von kommunalem oder ähnlichem Abwasser mit einem nach der Einbekkentechnologie arbeitenden Belebtschlammverfahren, in dem während eines Zyklus die Phasen Rühren (R), Belüften (B), Vorabsetzen (V) und Abziehen (A) des gereinigten Abwassers ablaufen, wobei der biologische Reaktor (5) durch eine Tauchwand (1) in einen Zulaufbereich (2) und ein Hauptbecken (3) unterteilt wird und wobei in der Rühr- und Belüftungsphase Belebtschlamm vom Hauptbecken in den Zulaufbereich gelangt, dadurch gekennzeichnet, daß der Zulauf in den biologischen Reaktor kontinuierlich erfolgt, daß die Zulaufzone eine gesamte Speicherung des in der V- und A-Phase zufließenden Abwassers erlaubt, wodurch ein Durchschlagen von Abwasser in den Ablauf in der A-Phase mit Sicherheit unterbunden wird und dieses Abwasser zur Denitrifikation in der nächsten R-Phase zur Verfügung steht, und daß während der gesamten R-Phase in der ganzen Zulaufzone wie im Hauptbecken ein anoxes Milieu und in der gesamten B-Phase entsprechend ein aerobes Milieu entsteht, um auf diese Weise den Zulaufbereich wie das Hauptbecken biochemisch nutzen zu können und somit den Zulaufbereich und das Hauptbecken als einheitlichen Gesamtreaktor wirken zu lassen.

2. Einrichtung nach Anspruch 1, dadurch gekennzeichnet, daß die B-Phase einschließlich einer eventuell vorhandenen R-Phase variabel gestaltet und solange beibehalten wird, bis eine vorgegebene Wasserspiegelhöhe (6) erreicht ist und somit ein zuflußabhängiger Betrieb der B-Phase erzielt wird (Fig. 3).

3. Einrichtung nach den Ansprüchen 1 und 2, dadurch gekennzeichnet, daß die Länge der V-Phase konstant angenommen und so gewählt wird, daß der Schlammspiegel am Beginn der A-Phase mindestens ca. 30 cm unter die Höhe des Abzuges des gereinigten Abwassers abgesunken ist.

4. Einrichtung nach den Ansprüchen 1 bis 3, dadurch gekennzeichnet, daß die A-Phase automatisch beendet und ein neuer Zyklus eingeleitet wird, wenn ein vorgegebener Tiefstwasserspiegel (7) erreicht ist.

5. Einrichtung nach den Ansprüchen 1 bis 4, dadurch gekennzeichnet, daß der Zulaufbereich durch eine vom Boden aufragende und bis auf ca. halbe Beckentiefe reichende Wand (4) in zwei Hälften geteilt wird (Fig. 1) und die Fließverhältnisse während der R- und B-Phase in diesem Bereich so gestaltet werden, daß Inhalt des Hauptbeckens am Beckenboden in die erste Hälfte des Zulaufbereiches fließt, dann aufsteigt, über die Wand (4) strömt, um schließlich in der zweiten Hälfte wieder abzutauchen und am Beckenboden in das Hauptbecken zurückzugelangen.

6. Einrichtung nach den Ansprüchen 1 bis 5, dadurch gekennzeichnet, daß das Hauptbecken als Umlaufbecken gemäß Fig. 1 und 2 gestaltet wird und die horizontalen Strömungen im Hauptbecken die erforderlichen Strömungsverhältnisse im Zulaufbereich erzeugen.

7. Einrichtung nach den Ansprüchen 1 bis 6, dadurch gekennzeichnet, daß mehrere Becken parallel und phasenverschoben betrieben werden, daß diese Becken eine Abwasserstraße bilden und daß ein dem Zufluß annähernd entsprechender kontinuierlicher Ablauf entsteht.

8. Einrichtung nach den Ansprüchen 1 bis 7, dadurch gekennzeichnet, daß die eine Abwasserstraße bildenden Becken annähernd gleich groß ausgeführt werden und daß der Zufluß zu den Becken kontinuierlich erfolgt und gleichmäßig auf die Becken aufgeteilt wird.

9. Einrichtung nach den Ansprüchen 1 bis 8, dadurch gekennzeichnet, daß bei kommunalem Abwasser und simultaner aerober Schlammstabilisierung mit vier zusammenhängenden gleich großen Becken gemäß Fig. 4 gearbeitet wird, in denen die einzelnen ca. 1 h langen Phasen phasenverschoben so ablaufen, daß ein dem Zufluß entsprechender Abfluß entsteht, daß im Stör- und Revisionsfall mit den in Betrieb bleibenden drei restlichen Becken der Betrieb aufrechterhalten wird, und daß der Belüftungsfaktor $\zeta_B = 2\, t_B : (2\, t_B + t_v + t_A) = 0{,}5$ beträgt.

10. Einrichtung nach den Ansprüchen 1 bis 9, dadurch gekennzeichnet, daß bei kommunalem Abwasser und vorgeschalteter Vorklärung mit drei zusammengehörigen gleich großen Becken gemäß Fig. 5 gearbeitet wird, im Stör- und Revisionsfall mit den restlichen zwei Becken der Betrieb aufrecht erhalten wird, und daß der Belüftungsfaktor ($\zeta_B = t_B : (t_B + t_V + t_A) = 0{,}33$ beträgt.

**Fig.1**

**Fig.2**

Fig.3

Fig.4

| B | B | V | A | Becken 1 |
| A | B | B | V | Becken 2 |
| V | A | B | B | Becken 3 |
| B | V | A | B | Becken 4 |

Fig.5

| B | V | A | Becken 1 |
| A | B | V | Becken 2 |
| V | A | B | Becken 3 |